(19) Europäisches Patentamt
European Patent Office
Office européen des brevets

(11) EP 0 821 424 A1

(12) **DEMANDE DE BREVET EUROPEEN**

(43) Date de publication:
**28.01.1998 Bulletin 1998/05**

(51) Int Cl.⁶: **H01M 4/62**

(21) Numéro de dépôt: **97401723.8**

(22) Date de dépôt: **17.07.1997**

(84) Etats contractants désignés:
**AT BE CH DE DK ES FI FR GB GR IE IT LI LU MC NL PT SE**

(30) Priorité: **23.07.1996 FR 9609211**

(71) Demandeur: **SAFT**
**F-93230 Romainville (FR)**

(72) Inventeurs:
- **Coco, Isabelle**
  **33405 Talence Cedex (FR)**
- **Coccianteli, Jean-Michel**
  **33000 Bordeaux (FR)**
- **Villenave, Jean-Jacques**
  **33405 Talence Cedex (FR)**

(74) Mandataire: **Laroche, Danièle et al**
**c/o ALCATEL ALSTHOM,**
**Département de Propriété Industrielle,**
**30, avenue Kléber**
**75116 Paris (FR)**

(54) **Electrode de type non fritté pour accumulateur à électrolyte alcalin**

(57) La présente invention a pour objet une électrode d'accumulateur à électrolyte alcalin comportant un collecteur de courant supportant une pâte contenant une matière électrochimiquement active et un liant, caractérisé en ce que ledit liant est un copolymère choisi parmi les copolymères de l'anhydride maléïque et d'un monomère vinylique, ledit liant étant réticulé après mise en forme de ladite électrode.

EP 0 821 424 A1

## Description

La présente invention concerne une électrode de type non fritté utilisée dans un accumulateur à électrolyte alcalin. Elle s'étend en outre au procédé de préparation et aux applications de cette électrode.

Jusqu'à une époque récente, tous les accumulateurs à électrolyte alcalin comportaient une électrode au nickel à support fritté dans les pores duquel la matière active était déposée électrochimiquement, ou chimiquement par plusieurs opérations successives de précipitation. Ce procédé de fabrication est toutefois long et coûteux. Pour répondre au besoin croissant des utilisateurs, ces électrodes peuvent aujourd'hui être réalisées de manière différente. Une électrode à support non fritté se compose d'une collecteur de courant métallique ou en matériau carboné, comme par exemple un feutre, une mousse, un déployé ou un feuillard perforé, revêtu d'une pâte. La pâte comprend la matière active, ici l'alliage hydrurable, et un liant auxquels on peut ajouter une poudre conductrice.

Le liant a pour fonction d'assurer la cohésion des grains de matière active, entre eux et sur le support de l'électrode, avant l'assemblage de l'accumulateur et durant son fonctionnement. Mais si on utilise un taux de liant élevé, la conductivité électrique est diminuée ce qui produit une baisse de la tension et de la capacité de l'accumulateur à régime élevé. En outre la surface électrochimiquement active accessible à l'électrolyte dépend de la manière dont les grains de matière active sont enrobés et liés par le polymère. Il est donc indispensable de minimiser la perte inévitable de capacité qui résulte de l'élaboration de l'électrode. On s'efforce d'introduire dans l'électrode la plus petite quantité possible de liant nécessaire mais suffisante pour assurer cette cohésion.

Plus particulièrement au cours du cyclage de l'accumulateur Ni-MH, l'alliage hydrurable absorbe et désorbe successivement l'hydrogène ce qui provoque sa division et une augmentation du volume de l'électrode. D'une part le liant doit être capable d'accompagner et de limiter l'augmentation du volume de l'électrode au cours de son vieillissement. D'autre part le liant doit maintenir le contact électrique entre les grains de l'alliage hydrurable. Une perte de conductivité de l'électrode MH n'est jamais récupérable, contrairement à ce qui se produit par exemple pour une électrode au cadmium ou au zinc.

Les résines fluorées n'assurent une bonne tenue mécanique à l'électrode que pour des teneurs supérieures à 3% en poids par rapport à la matière active, ce qui diminue considérablement les performances en décharge rapide. D'autres liants présentent une dégradation de leurs propriétés adhésives au cours du cyclage. Les dérivés cellulosiques ne permettent pas de conserver la cohésion intergranulaire après une opération de laminage et pendant le fonctionnement dans l'électrolyte. Les élastomères thermoplastiques permettent un bon fonctionnement électrochimique mais la tenue mécanique de l'électrode est rapidement insuffisante. La poly(vinylpyrrolidone) permet d'obtenir de bons rendements électrochimiques mais conduit à une électrode rigide et fragile, empêchant toute opération de calibrage par laminage.

La surface électrochimiquement active d'une électrode dépend de la surface mouillée par l'électrolyte. Si l'électrode est insuffisamment mouillée, la surface active est diminuée ce qui entraîne une augmentation de la densité de courant local et une plus faible capacité chargée. Pour favoriser la mouillabilité de l'électrode par l'électrolyte aqueux, le liant doit donc posséder un caractère hydrophile.

C'est le cas des résines cellulosiques mais la tenue mécanique de l'électrode se dégrade au cours du cyclage. Pour un liant dont les propriétés adhésives sont sensibles à la pression comme le copolymère de styrène et de butadiène, la mouillabilité de l'électrode se détériore pour des teneurs supérieures à 3% et la durée de vie est abrégée.

En particulier le liant joue un rôle important dans les propriétés électrochimiques de l'électrode négative de l'accumulateur Ni-MH. Dans un accumulateur Ni-MH, le liant doit permettre la réabsorption de l'hydrogène par voie solide-gaz au cours de la décharge. La perméabilité au gaz conférée par la structure du liant utilisé est un critère essentiel pour assurer le fonctionnement de l'électrode. Pour que le rendement de la réduction de l'hydrogène sur l'électrode négative soit élevé, il est nécessaire de ménager l'apparition de ménisques triphasiques sur l'électrode négative. Ces ménisques ne se forment que lorsque l'électrode possède un caractère hydrophobe.

Les résines fluorées possèdent un caractère hydrophobe marqué rendant difficile l'imprégnation de l'électrode et la rétention de l'électrolyte. Ce qui affecte les performances en régime rapides. De nombreux polymères sont connus pour leur faible perméabilité à l'hydrogène, comme les polymères vinyliques par exemple.

La présente invention a pour but de proposer une électrode qui réunit et conserve au cours du temps les qualités mentionnées précédemment en terme de performances électrochimiques et de tenue mécanique sans présenter les inconvénients des électrodes connues.

La présente invention a aussi pour but de proposer une électrode qui conserve un rendement d'absorption/désorption élevé pendant toute sa durée de vie, et donc utilisable comme électrode négative dans un accumulateur Ni-MH.

L'objet et de la présente invention est une électrode d'accumulateur à électrolyte alcalin comportant un collecteur de courant supportant une pâte composée substantiellement d'une matière électrochimiquement active, d'un matériau conducteur, d'un liant et d'un épaississant, caractérisé en ce que ledit liant est un polymère non-fluoré réticulé d'un premier monomère qui est l'anhydride maléïque et d'un deuxième monomère choisi parmi les monomères vinyliques et d'un agent de réticulation, et que ledit épaississant est un composé de type cellulosique.

L'électrode selon l'invention présente des performances améliorées, notamment en régime rapide, grâce aux propriétés de mouillabilité du liant. En outre le liant forme une structure fibreuse au sein de l'électrode ce qui facilite le transport de gaz à la surface de l'alliage.

De préférence ledit liant est choisi parmi un copolymère d'anhydride maléïque et de styrène (SMA) et un copolymère d'anhydride maléïque et d'éther de vinyle (EVMA).

Ces copolymères ont pour avantage leur grande stabilité dans les conditions d'utilisation du générateur. De plus ces copolymères sont commercialement disponibles.

De préférence, ledit copolymère possède un indice d'acide compris entre 250 et 500. On défini l'indice d'acide comme le poids en milligramme de potasse KOH nécessaire à la neutralisation d'un gramme de copolymère.

Avantageusement ledit liant possède un taux de réticulation compris entre 20% et 50% molaire par rapport au nombre de motifs anhydrides du copolymère. On définit le taux de réticulation comme le nombre de motifs anhydrides qui ont réagi avec l'agent de réticulation. Pour des taux de réticulation inférieurs à 20% la tenue mécanique n'est pas sensiblement améliorée. Alors que pour des taux supérieurs à 50% la rigidité de l'électrode augmente nettement.

Pour la stabilité du liant il est indispensable qu'il soit réticulé, par exemple le SMA non réticulé est soluble dans l'électrolyte. La présence d'un agent de réticulation dans la pâte est alors nécessaire et le liant est réticulé après mise en forme de l'électrode. Dans le cas présent la réticulation est obtenue par estérification de l'anhydride.

Un copolymère d'anhydride maléïque et de styrène a la formule générale suivante, dans laquelle φ représente le radical phényle:

$$-[-(-HC-CH-)_n-(-CH_2-CH-)_m-]_p-$$

C C φ

O O O

De préférence, ledit copolymère d'anhydride maléïque et de styrène possède un rapport m/n des motifs styrène/anhydride maléïque compris entre 1 et 4.

Un copolymère d'anhydride maléïque et d'éther de vinyle a pour formule générale:

$$-[-(-HC-CH-)_{n'}-(-CH_2-CH-)_{m'}-]_{p'}-$$

C C O-Z

O O O

où Z est un groupe alkyle non fonctionnel choisi parmi un groupe méthyle, éthyle, butyle et 2-éthylhexyle.

De préférence, ledit copolymère d'anhydride maléïque et d'éther de vinyle possède un rapport n'/m' des motifs anhydride maléïque/éther de vinyle de l'ordre de 1.

Selon une variante, ladite pâte contient en outre dans une proportion inférieure à 5% en poids d'au moins un additif.

Selon une autre variante, ladite pâte contient un matériau conducteur choisi parmi une poudre de nickel et de carbone. On pourrait aussi choisir une autre poudre métallique compatible avec le milieu.

Selon encore une autre variante, ledit collecteur de courant est un support métallique choisi parmi un feutre, une mousse, un déployé, un feuillard perforé et un feuillard gaufré. On entend par feuillard gaufré, un feuillard perforé et déformé pour faire apparaître à sa surface des reliefs. Le support métallique est de préférence un support de nickel.

Selon encore une autre variante, la surface de l'électrode est revêtue d'une couche hydrophobe de moindre épaisseur éventuellement fluorée.

Selon une forme d'exécution particulière, ladite matière active est un alliage hydrurable. Dans ce cas l'électrode est apte à fonctionner comme électrode négative d'un accumulateur nickel-hydrure métallique.

La présente invention a aussi pour objet un procédé de fabrication d'une électrode selon l'une des revendications précédentes, comprenant les étapes suivantes:

- on réalise ladite pâte en ajoutant à une suspension dans l'eau de ladite matière active en poudre, une solution dudit liant et dudit agent de réticulation, et on ajuste la viscosité avec ledit épaississant,
- on forme une électrode en revêtant ledit collecteur de courant de ladite pâte,
- on effectue un traitement de réticulation de ladite électrode.

Selon un mode de réalisation préférentiel, ladite pâte contient un agent de réticulation qui est un polymère de l'oxyde d'éthylène (PEO). D'autres agents de réticulation peuvent aussi être utilisés tels que les diols ou les diamines

par exemple.

Ledit agent de réticulation a une masse molaire comprise entre 200g/mole et 1000g/mole. La longueur de la molécule de l'agent de réticulation doit être suffisante pour obtenir un réseau souple. Mais sa masse molaire doit être limitée sinon les propriétés de l'agent masqueront celles du copolymère.

La proportion T dudit agent de réticulation dans ladite pâte contenant ledit copolymère d'anhydride maléïque et de monomère vinylique est définie par la relation suivante:

$$T = \overline{M}_{PEO} \times \frac{R}{4} \times \frac{I_a}{56,11.10^3}$$

où T correspond à la masse dudit agent de réticulation en gramme pour un gramme dudit copolymère,
$\overline{M}_{PEO}$ est la masse molaire moyenne dudit agent de réticulation en gramme par mole,
R est ledit taux de réticulation,
$I_a$ est ledit indice d'acide,
et 56,11 représente la masse molaire de la potasse KOH en gramme par mole.

De préférence, la proportion T dudit agent de réticulation est comprise entre 0,04 et 1,1. Ces bornes sont corrélées aux valeurs de l'indice d'acide. Ce domaine de valeurs correspond pour le SMA à un indice d'acide compris entre 250 et 500. Par exemple un EVMA d'indice d'acide égal à 450 conduira à un taux d'agent de réticulation compris entre 0,08 et 0,21.

Il est indispensable de minimiser la perte de capacité résultant de l'élaboration de l'électrode en introduisant la plus petite quantité possible de liant nécessaire mais suffisante pour assurer la tenue mécanique de l'électrode. En deçà d'un taux T de 0,04 l'électrode n'est pas suffisamment rigide, mais au-delà de 1,1 la rigidité de l'électrode devient excessive.

Le traitement de réticulation peut être fait par diverses méthodes connue de l'homme du métier. De préférence ledit traitement de réticulation est un traitement thermique.

Ladite solution du liant est choisie parmi une solution alcaline et une solution organique.

Selon une variante, ladite suspension contient en outre au moins un additif choisi parmi un agent de texture et un agent dopant.

D'autres caractéristiques et avantages de la présente invention apparaîtront au cours des exemples suivants de réalisation, donnés bien entendu à titre illustratif et non limitatif, et dans le dessin annexé sur lequel la figure unique montre l'évolution comparative de la variation de pression en charge P en bars en fonction du nombre de cycles effectués N, pour un accumulateur selon l'art antérieur et un accumulateur selon l'invention.

EXEMPLE 1

On réalise une électrode I selon l'art antérieur en introduisant dans un support tridimensionnel poreux, qui est une mousse de nickel une pâte composée de:

- 99,1% en poids d'une poudre d'un alliage hydrurable de forme $AB_n$, où A est un "MISCHMETAL" et B est du nickel partiellement substitué par Mn, Al et/ou Co,
- 0,3% en poids d'un épaississant cellulosique,
- 0,3% en poids d'un matériau conducteur qui est une poudre de carbone,
- 0,3% en poids de liant qui est un copolymère de styrène et de butadiène (SBR) sous forme d'une dispersion aqueuse.

La viscosité de la pâte est ajustée par de l'eau. Une fois le support revêtu de la pâte, l'électrode est séchée afin d'en éliminer l'eau et d'effectuer la réticulation du liant.

EXEMPLE 2

On réalise une électrode II selon l'art antérieur de la manière décrite dans l'exemple 1, à l'exception du fait que la pâte est composée de:

- 94,4% en poids de poudre d'alliage hydrurable,
- 0,3% en poids d'épaississant cellulosique,
- 0,3% en poids de matériau conducteur,
- 5% en poids de liant SBR.

L'électrode est ensuite préparée comme dans l'exemple 1.

EXEMPLE 3

On réalise une électrode III selon l'invention de la manière décrite dans l'exemple 1, à l'exception du fait que la pâte est composée de:

- 99% en poids de poudre d'alliage hydrurable,
- 0,3% en poids d'un épaississant cellulosique,
- 0,3% en poids de matériau conducteur,
- 0,3% en poids de liant qui est un copolymère d'anhydride maléïque et de styrène (SMA), sous forme de poudre dissoute dans une très faible quantité d'acétone,
- 0,1% d'un agent de réticulation qui est un polymère de l'oxyde d'éthylène (PEO).

L'électrode est ensuite préparée comme dans l'exemple 1.

EXEMPLE 4

On réalise une électrode IV selon l'invention comme décrit dans l'exemple 1, à l'exception du fait que la pâte est composée de:

- 92,6% en poids de poudre d'alliage hydrurable,
- 0,3% en poids d'épaississant cellulosique,
- 0,3% en poids de matériau conducteur,
- 5% en poids de liant SMA.
- 1,8% d'un agent de réticulation PEO.

L'électrode est ensuite préparée de la manière énoncée dans l'exemple 1.

EXEMPLE 5

La mouillabilité des électrodes I à IV, précédemment préparées, est déterminée par immersion dans l'électrolyte, une solution alcaline à deux composants de concentration 8,7N. Au bout de 4 heures, on détermine l'absorption d'électrolyte par la mesure de la prise de poids de l'électrode.

La rétention d'électrolyte par les électrodes est évaluée en plaçant l'électrode sur une plaque de verre inclinée selon un angle de 45° au dessus de l'horizontale. On laisse l'électrode s'égoutter pendant 45 minutes et on mesure la perte de poids de l'électrode.

Les résultats sont rassemblés dans le tableau 1 ci-dessous. L'absorption et le rétention d'électrolyte sont exprimées en % en poids par rapport au poids de l'électrode sèche.

TABLEAU 1

| électrode | absorption % | rétention % |
|---|---|---|
| I | 2,5 | 1,3 |
| II | 2,3 | 1 |
| III | 4,8 | 2,7 |
| IV | 10,5 | 9,6 |

A taux de liant égal, la comparaison de ces résultats montre que la mouillabilité d'une électrode selon l'invention est nettement supérieure à celle des électrode de l'art antérieur, et par conséquent ces électrodes possède une surface électrochimiquement active plus étendue.

EXEMPLE 6

Les électrodes I à IV précédemment préparées sont évaluées électrochimiquement en cellules contenant comme

électrolyte une solution alcaline à deux composants de concentration 8,7N, et montées face à une électrode de nickel de type non-fritté. Les cellules sont placées dans un conteneur étanche muni d'un capteur de pression afin de suivre l'évolution de la pression d'hydrogène en charge. La conception des cellules est telle que leur capacité est limitée par celle de l'électrode négative.

Le test est effectué dans les conditions suivantes, où Ic représente le régime nécessaire pour charger l'électrode en 1 heure:

cycles 1 à 4: charge à un régime de 0,2Ic pendant 7,5 heures,
décharge à 0,2Ic jusqu'à une tension de 1 volt;
cycle 5: charge à 0,2Ic pendant 7,5 heures,
décharge à Ic jusqu'à 0,8 volt.

On mesure au cycle 4 la capacité chargée $C_4$ avant le dégagement d'hydrogène et la capacité déchargée $D_4$, et au cycle 5 la capacité déchargée $D_5$ et la tension à mi-décharge $V_5$. Les résultats sont rassemblés dans le tableau 2 ci-dessous. Les capacités sont exprimées en milliampères-heure par gramme de matière active et la tension en volt.

TABLEAU 2

| électrode | $C_4$ | $D_4$ | $D_5$ | $V_5$ |
|---|---|---|---|---|
| I | 253 | 301 | 270 | 1,115 |
| II | 240 | 273 | 240 | 1,100 |
| III | 251 | 304 | 283 | 1,128 |
| IV | 273 | 304 | 267 | 1,126 |

Ces résultats montrent qu'une électrode selon l'invention, même dans le cas où elle comporte un taux de liant élevé, présente des performances supérieures aux électrodes de l'art antérieur.

EXEMPLE 7

Les électrodes I et III précédemment préparées sont évaluées en accumulateurs étanches de type Ni-MH d'une capacité de 10Ah. L'accumulateur contient comme électrolyte une solution alcaline à trois composants de concentration 8,7N. Les électrodes sont montées face à une électrode de nickel de type non-fritté. Un séparateur non-tissé en polyoléfine est placé entre les électrodes. Les accumulateurs sont équipés d'un capteur de pression.

Le test de cyclage est effectué dans les conditions suivantes pendant 500 cycles:

- charge à un régime de 2 Ampères pendant 7,5 heures,
- décharge à 3,3A jusqu'à une tension d'arrêt de 1 Volt;

Les résultats sont rassemblés dans le tableau 3 ci-dessous et sur la figure unique. On mesure respectivement aux cycles 30 et 500 la variation de pression au cours de la charge $P_{30}$ et $P_{500}$, la capacité déchargée $D_{30}$ et $D_{500}$, et la tension à mi-décharge $V_{30}$ et $V_{500}$. La variation de pression est donnée en bars, les capacités sont exprimées en milliampères-heure par gramme de matière active et la tension en volt.

TABLEAU 3

| électrode | | | | |
|---|---|---|---|---|
| | cycle 30 | $P_{30}$ | $D_{30}$ | $V_{30}$ |
| I | | 0,3 | 11,35 | 1,205 |
| III | | 0,8 | 11,45 | 1,205 |
| | cycle 500 | $P_{500}$ | $D_{500}$ | $V_{500}$ |
| I | | 2,7 | 12,75 | 1,230 |
| III | | 1,8 | 12,80 | 1,230 |

Ces résultats montrent que la pression P dans l'accumulateur contenant une électrode selon l'invention (courbe 1) est plus stable que dans l'accumulateur contenant une électrode de l'art antérieur (courbe 2), notamment au-delà de 300 cycles.

**Revendications**

1. Electrode d'accumulateur à électrolyte alcalin comportant un collecteur de courant supportant une pâte composée substantiellement d'une matière électrochimiquement active, d'un matériau conducteur, d'un liant et d'un épaississant, caractérisé en ce que ledit liant est un polymère non-fluoré réticulé d'un premier monomère qui est l'anhydride maléïque, d'un deuxième monomère choisi parmi les monomères vinyliques et d'un agent de réticulation, et que ledit épaississant est un composé de type cellulosique.

2. Electrode selon la revendication 1, dans laquelle ledit deuxième monomère est choisi parmi le styrène et l'éther de vinyle.

3. Electrode selon l'une des revendications 1 et 2, dans laquelle ledit copolymère possède un indice d'acide compris entre 250 et 500, ledit indice d'acide étant défini comme le poids en mg d'hydroxyde de potassium nécessaire à la neutralisation d'un gramme de copolymère.

4. Electrode selon l'une des revendications précédentes, dans laquelle ledit copolymère possède un taux de réticulation compris entre 20% et 50% molaire par rapport au nombre de groupes anhydrides.

5. Electrode selon l'une des revendications précédentes, dans laquelle ledit copolymère d'anhydride maléïque et de styrène possède un rapport des motifs styrène/anhydride maléïque compris entre 1 et 4.

6. Electrode selon l'une des revendications 1 à 4, dans laquelle ledit copolymère d'anhydride maléïque et d'éther de vinyle possède un rapport des motifs anhydride maléïque/éther de vinyle de l'ordre de 1.

7. Electrode selon l'une des revendications précédentes, dans laquelle ladite pâte contient en outre dans une proportion inférieure à 5% en poids d'au moins un additif.

8. Electrode selon l'une des revendications précédentes, dans laquelle ledit matériau conducteur est choisi parmi une poudre de nickel et de carbone.

9. Electrode selon l'une des revendications précédente, dans laquelle ledit collecteur de courant est un support métallique choisi parmi un feutre, une mousse, un déployé, un feuillard perforé et un feuillard gaufré.

10. Electrode selon l'une des revendications précédentes, dont la surface est revêtue d'une couche hydrophobe de moindre épaisseur éventuellement fluorée.

11. Electrode selon l'une des revendications précédente, dans laquelle ladite matière active est un alliage hydrurable.

12. Accumulateur nickel-métal hydrurable contenant l'électrode selon la revendication 11

13. Procédé de fabrication d'une électrode selon l'une des revendications 1 à 11, comprenant les étapes suivantes:

    - on réalise ladite pâte en ajoutant à une suspension dans l'eau de ladite matière active en poudre et dudit matériau conducteur, une solution dudit liant et dudit agent de réticulation, et on ajuste la viscosité avec ledit épaississant,
    - on forme une électrode en revêtant de ladite pâte, ledit collecteur de courant,
    - on effectue un traitement de réticulation de ladite électrode formée.

14. Procédé selon la revendication 13, dans laquelle ledit agent de réticulation est un polymère de l'oxyde d'éthylène.

15. Procédé selon l'une des revendications 13 et 14, dans laquelle ledit agent de réticulation a une masse molaire comprise entre 200g/mole et 1000g/mole.

**16.** Procédé selon l'une des revendications 13 à 15, dans laquelle la proportion T dudit agent de réticulation dans ladite pâte est définie par la relation suivante:

$$T = \overline{M}_{PEO} \times \frac{R}{4} \times \frac{I_a}{56{,}11.10^3}$$

où T correspond à la masse dudit agent de réticulation en gramme pour un gramme dudit copolymère, $\overline{M}_{PEO}$ est la masse molaire moyenne dudit agent de réticulation en gramme par mole, R est ledit taux de réticulation, $I_a$ est ledit indice d'acide, et 56,11 g/mole représente la masse molaire de la potasse.

**17.** Procédé selon l'une des revendications 13 à 16, dans laquelle la proportion T dudit agent de réticulation est comprise entre 0,04g et 1,1g pour un gramme dudit copolymère.

**18.** Procédé selon l'une des revendications 13 à 17, dans lequel ledit traitement de réticulation est un traitement thermique.

**19.** Procédé selon l'une des revendications 13 à 18, dans lequel ladite solution est choisie parmi une solution alcaline et une solution organique.

**20.** Procédé selon l'une des revendications 13 à 19, dans lequel ladite suspension contient en outre au moins un additif choisi parmi un agent de texture et un agent dopant.

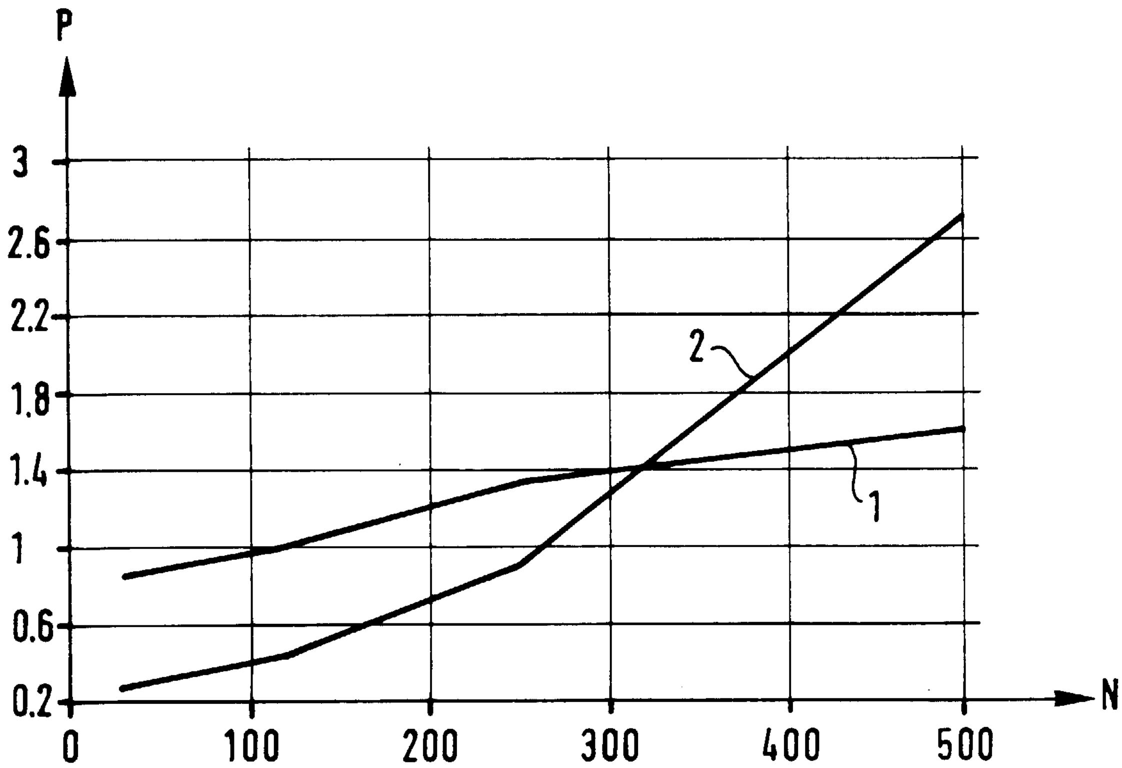
P
3
2.6
2.2
1.8
1.4
1
0.6
0.2
0
100
200
300
400
500
N
2
1

Office européen des brevets

# RAPPORT DE RECHERCHE EUROPEENNE

Numéro de la demande
EP 97 40 1723

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | US 5 525 444 A (ITO TAKEO ET AL)<br>* revendications 15,16,19,20,23-27,29 *<br>* colonne 8, ligne 54 - colonne 10, ligne 13 *<br>* colonne 10, ligne 49 - colonne 11, ligne 37 *<br>* colonne 11, ligne 49 - colonne 112, ligne 19 *<br>* exemples 16-30; tableau 2 *<br>* exemples 37-43 *<br>--- | 1,2,7-9, 11-13 | H01M4/62 |
| P,X<br><br>P,Y | EP 0 740 355 A (ACCUMULATEURS FIXES) 30 octobre 1996<br>* exemple 10 *<br>* page 2, ligne 46 - ligne 47 *<br>* page 5, ligne 21 - ligne 55 *<br>--- | 1,2, 11-13, 18,19<br><br>1,8 | |
| P,Y | EP 0 726 607 A (SANYO CHEMICAL IND LTD) 14 août 1996<br>* page 2, ligne 45 - ligne 3 *<br>* page 3, ligne 11 - ligne 22 *<br>* page 3, ligne 31 - ligne 44 *<br>* page 4, ligne 19 - ligne 44 *<br>--- | 1,8 | DOMAINES TECHNIQUES RECHERCHES (Int.Cl.6)<br>H01M |
| A | PATENT ABSTRACTS OF JAPAN<br>vol. 018, no. 586 (E-1627), 9 novembre 1994<br>& JP 06 223833 A (FUJI PHOTO FILM CO LTD), 12 août 1994,<br>* abrégé *<br>--- | 1,2 | |
| A | DE 44 41 760 A (UNION CARBIDE CHEM PLASTIC) 1 juin 1995<br>* page 6, ligne 27 - ligne 30; revendications 1,7,8 *<br>---<br>-/-- | 1,2 | |

Le présent rapport a été établi pour toutes les revendications

| Lieu de la recherche | Date d'achèvement de la recherche | Examinateur |
|---|---|---|
| LA HAYE | 7 novembre 1997 | D'hondt, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

Office européen des brevets

**RAPPORT DE RECHERCHE EUROPEENNE**

Numéro de la demande
EP 97 40 1723

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US 4 245 016 A (RAMPEL GUY) 13 janvier 1981<br>* colonne 1, ligne 60 - colonne 2, ligne 11 *<br>--- | 1 | |
| A | CHEMICAL ABSTRACTS, vol. 94, no. 6, 9 février 1981<br>Columbus, Ohio, US;<br>abstract no. 33719,<br>HITACHI MAXELL, LTD., JAPAN: "Alkaline batteries"<br>XP002029927<br>* abrégé *<br>& JP 55 030 267 A (HITACHI MAXELL, LTD., JAPAN)<br>--- | 1 | |
| A | CHEMICAL ABSTRACTS, vol. 99, no. 18, 31 octobre 1983<br>Columbus, Ohio, US;<br>abstract no. 143172,<br>TOSHIBA BATTERY CO., LTD., JAPAN: "Alkaline batteries"<br>XP002029928<br>* abrégé *<br>& JP 58 073 956 A (TOSHIBA BATTERY CO., LTD., JAPAN)<br>--- | 1 | DOMAINES TECHNIQUES RECHERCHES (Int.Cl.6) |
| A | CHEMICAL ABSTRACTS, vol. 118, no. 8, 22 février 1993<br>Columbus, Ohio, US;<br>abstract no. 63243,<br>MITSUYASU, KIYOSHI: "Anodes for secondary nickel-hydrogen batteries"<br>XP002029929<br>* abrégé *<br>& JP 04 272 656 A (TOSHIBA CORP., JAPAN)<br>----- | 1 | |

Le présent rapport a été établi pour toutes les revendications

| Lieu de la recherche | Date d'achèvement de la recherche | Examinateur |
|---|---|---|
| LA HAYE | 7 novembre 1997 | D'hondt, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)